# EUROPEAN PATENT APPLICATION

(11) **EP 4 648 332 A1**
(43) Date of publication of application: **12.11.2025**
(21) Application number: 23918967.3
(22) Date of filing: 30.01.2023
(51) Int. Cl.: H04L 5/00, H04B 17/373

(54) **CHANNEL INFORMATION TRANSMISSION METHOD AND APPARATUS**

(71) Applicant: Huawei Technologies Co., Ltd., Shenzhen, Guangdong 518129 (CN)
(72) Inventor: HE, Jia, Shenzhen, Guangdong 518129 (CN); LI, Xianjin, Shenzhen, Guangdong 518129 (CN); ZHANG, Xi, Shenzhen, Guangdong 518129 (CN)
(74) Representative: Isarpatent
(86) International application number: PCT/CN2023/073895
(87) International publication number: WO 2024/159377

(57) **Abstract**

This application provides a channel information transmission method and an apparatus. The method includes: A second apparatus receives first indication information, where the first indication information indicates a first channel information prediction value; the second apparatus measures a reference signal from a first apparatus to obtain first channel information; and further, the second apparatus sends second channel information to the first apparatus based on the first channel information prediction value, a first threshold corresponding to the first channel information prediction value, and the first channel information. In this way, overheads of transmitting channel information by the second apparatus can be reduced.

## Description

### TECHNICAL FIELD

This application relates to the field of communication technologies, and in particular, to a channel information transmission method and an apparatus.

### BACKGROUND

Transmission of channel information is crucial to communication performance. In a fifth generation (fifth generation, 5G) communication system, codebook-based channel information feedback is used. Compared with ideal channel information feedback, codebook-based channel information feedback has a gap in performance, feedback overheads, and high system design complexity. In some implementations, when a terminal device reports the channel information to an access network device, the channel information is reported through differential reporting between ports/subbands, through orthogonal basis sparse representation between ports/subbands, or the like, to reduce overheads of reporting the channel information by the terminal device. However, when channel information results between ports/subbands are greatly different, effect of reducing overheads achieved by reporting the channel information in the foregoing manner is poor, and it is most likely that transmission performance of a system is reduced.

How to reduce channel information transmission overheads while ensuring transmission performance is an urgent problem to be resolved.

### SUMMARY

This application provides a channel information transmission method and a communication apparatus, to reduce overheads of transmitting (or being understood as feeding back or sending) channel information.

According to a first aspect, this application provides a channel information transmission method that may be applied to a second apparatus. The second apparatus may be a communication device (for example, a terminal device or a network device), a chip in a communication device, or an apparatus matching a communication device. In this method, the second apparatus receives first indication information, where the first indication information indicates a first channel information prediction value; the second apparatus measures a reference signal from a first apparatus to obtain first channel information; and further, the second apparatus sends second channel information to the first apparatus based on the first channel information prediction value, a first threshold corresponding to the first channel information prediction value, and the first channel information.

Based on the method described in the first aspect, in a manner in which the second apparatus transmits measured channel information based on a prediction value (that is, the first channel information prediction value) that more closely matches the measured channel information (that is, the first channel information), a quantity of bits of transmitted channel information (that is, the second channel information) can be less than a quantity of bits of the measured channel information, and the first apparatus can still accurately determine the measured channel information based on the transmitted channel information. That is, in the manner described in the first aspect, overheads of transmitting channel information by the second apparatus can be reduced.

In a possible implementation, if a difference between the first channel information and the first channel information prediction value is less than or equal to the first threshold, the second channel information is the difference between the first channel information and the first channel information prediction value; or if a difference between the first channel information and the first channel information prediction value is greater than the first threshold, the second channel information is the first channel information. According to this possible implementation, the second apparatus may determine, based on the first threshold, whether the first channel information prediction value is valid. When the first channel information prediction value is valid (that is, the difference between the first channel information and the first channel information prediction value is less than or equal to the first threshold), the second channel information transmitted by the second apparatus is less than the measured channel information (that is, the first channel information). When the first channel information prediction value is invalid (that is, the difference between the first channel information and the first channel information prediction value is greater than the first threshold), the second channel information transmitted by the second apparatus is less than the measured channel information (that is, the first channel information). Therefore, a manner of transmitting the channel information by the second apparatus is more flexible.

In a possible implementation, the second apparatus receives second indication information, where the second indication information indicates the first threshold. According to this possible implementation, the first threshold is dynamically indicated, so that flexibility of the first threshold and adaptation between the first threshold and to-be-transmitted channel information can be improved.

In a possible implementation, the second indication information further indicates a scale factor corresponding to the first threshold, and the scale factor is associated with precision of the first threshold. According to this possible implementation, the precision of the first threshold is dynamically adjusted, so that flexibility of the first threshold and adaptation between the first threshold and the to-be-transmitted channel information are improved.

In a possible implementation, the first threshold is pre-specified in a protocol. According to this possible implementation, the first threshold may not be indicated by the first apparatus, so that a communication transmission resource is saved.

In a possible implementation, the first threshold is determined based on the first channel information and a first correspondence, and the first correspondence includes a correspondence between the first channel information and the first threshold.

In a possible implementation, the second apparatus sends type indication information to the first apparatus, where the type indication information indicates a type of the second channel information, and the type is a difference transmission type or a full-value transmission type. When the second channel information is the difference between the first channel information and the first channel information prediction value, the type of the second channel information is the difference transmission type; or when the second channel information is the first channel information, the type of the second channel information is the full-value transmission type. According to this possible implementation, when the second apparatus flexibly selects channel information to be transmitted, it is ensured that the first apparatus can synchronously know the type of the channel information transmitted by the second apparatus, to ensure that flexible transmission of the channel information is effectively performed by the second apparatus.

In a possible implementation, the first channel information belongs to a channel parameter CHP related to multipath transmission or channel state information CSI. The CHP includes one or more of the following information: a transmission angle, a transmission delay, transmission power, or a Doppler value. The CSI includes one or more of the following information: a channel state information-reference signal resource indicator CRI, a rank indicator RI, a channel quality indicator CQI, a precoding matrix indicator PMI, or a layer indicator LI.

In a possible implementation, the first channel information belongs to the channel state information CSI. The CSI further includes third channel information. A priority of the third channel information is lower than a priority of the first channel information. The first indication information further indicates a second channel information prediction value corresponding to the third channel information. In this case, if the difference between the first channel information and the first channel information prediction value is less than or equal to the first threshold, and a difference between the third channel information and the second channel information prediction value is less than or equal to a second threshold, the second apparatus sends a difference between the third channel information and a third channel information prediction value to the first apparatus; or if the difference between the first channel information and the first channel information prediction value is greater than the first threshold, the second apparatus sends the third channel information to the first apparatus. According to this possible implementation, when a channel information prediction value corresponding to channel information with a higher priority is invalid (that is, a difference between the channel information and a prediction value corresponding to the channel information is greater than a threshold corresponding to the channel information), the second apparatus directly determines that a channel information prediction value corresponding to channel information with a lower priority is invalid, and sends the channel information with a lower priority to the first apparatus, to save a computing resource of the second apparatus and reduce overheads of the second apparatus.

In a possible implementation, the first channel information prediction value is obtained based on a sensing-assisted channel prediction function of the first apparatus.

According to a second aspect, this application provides a channel information transmission method that may be applied to a first apparatus. The first apparatus may be a communication device (for example, a terminal device or a network device), a chip in a communication device, or an apparatus matching a communication device. The method includes: The first apparatus sends a reference signal to a second apparatus, where the reference signal is used to obtain first channel information; the first apparatus receives second channel information from the second apparatus, where the second channel information is determined based on a first channel information prediction value, a first threshold corresponding to the first channel information prediction value, and the first channel information; and the first apparatus determines the first channel information based on the second channel information.

For beneficial effect of the method provided in the second aspect, refer to descriptions of beneficial effect of the method according to the first aspect. Details are not described herein again.

In a possible implementation, if a difference between the first channel information and the first channel information prediction value is less than or equal to the first threshold corresponding to the first channel information prediction value, the second channel information is the difference between the first channel information and the first channel information prediction value; or if a difference between the first channel information and the first channel information prediction value is greater than the first threshold, the second channel information is the first channel information.

In a possible implementation, the first apparatus sends second indication information to the second apparatus, where the second indication information indicates the first threshold.

In a possible implementation, the second indication information further indicates a scale factor corresponding to the first threshold, and the scale factor is associated with precision of the first threshold.

In a possible implementation, the first threshold is pre-specified in a protocol.

In a possible implementation, the first threshold is determined based on the first channel information and a first correspondence, and the first correspondence includes a correspondence between the first channel information and the first threshold.

In a possible implementation, the first apparatus receives type indication information from the second apparatus, where the type indication information indicates a type of the second channel information, and the type is a difference transmission type or a full-value transmission type. When the second channel information is the difference between the first channel information and the first channel information prediction value, the type of the second channel information is the difference transmission type; or when the second channel information is the first channel information, the type of the second channel information is the full-value transmission type.

In a possible implementation, the first channel information belongs to a channel parameter CHP related to multipath transmission or channel state information CSI. The CHP includes one or more of the following information: a transmission angle, a transmission delay, transmission power, or a Doppler value. The CSI includes one or more of the following information: a channel state information-reference signal resource indicator CRI, a rank indicator RI, a channel quality indicator CQI, a precoding matrix indicator PMI, or a layer indicator LI.

In a possible implementation, the first channel information belongs to the channel state information CSI. The CSI further includes third channel information. A priority of the third channel information is lower than a priority of the first channel information. The first indication information further indicates a second channel information prediction value corresponding to the third channel information. If the difference between the first channel information and the first channel information prediction value is greater than the first threshold, and a difference between the third channel information and the second channel information prediction value is less than or equal to a second threshold, the first apparatus receives a difference between the third channel information and a third channel information prediction value from the second apparatus; or if the difference between the first channel information and the first channel information prediction value is greater than the first threshold, the first apparatus receives the third channel information from the second apparatus.

In a possible implementation, the first apparatus obtains the first channel information prediction value by using a sensing-assisted channel prediction function.

According to a third aspect, this application provides a communication apparatus. The communication apparatus includes modules/units configured to perform the method according to any one of the first aspect and the possible implementations of the first aspect.

According to a fourth aspect, this application provides a communication apparatus. The communication apparatus includes modules/units configured to perform the method according to any one of the second aspect and the possible implementations of the second aspect.

According to a fifth aspect, this application provides a communication apparatus. The apparatus may be a second apparatus. The second apparatus may be a communication device (for example, a terminal device or a network device), a chip in a communication device, or an apparatus matching a communication device. The communication apparatus may alternatively be a chip system, and the communication apparatus may perform the method performed by the second apparatus in the first aspect. A function of the communication apparatus may be implemented by hardware, or may be implemented by hardware executing corresponding software. The hardware or the software includes one or more units corresponding to the foregoing functions. The unit may be software and/or hardware. For operations performed by the communication apparatus and beneficial effect, refer to the method according to the first aspect and the beneficial effects thereof. Repeated parts are not described again.

According to a sixth aspect, this application provides a communication apparatus. The apparatus may be a first apparatus. The first apparatus may be a communication device (for example, a terminal device or a network device), a chip in a communication device, or an apparatus matching a communication device. The communication apparatus may alternatively be a chip system, and the communication apparatus may perform the method performed by the first apparatus in the second aspect. A function of the communication apparatus may be implemented by hardware, or may be implemented by hardware executing corresponding software. The hardware or the software includes one or more units corresponding to the foregoing functions. The unit may be software and/or hardware. For operations performed by the communication apparatus and beneficial effect, refer to the method according to the second aspect and the beneficial effects thereof. Repeated parts are not described again.

According to a seventh aspect, this application provides a communication apparatus. The communication apparatus includes a processor. The processor is configured to enable, by executing a computer program or instructions stored in a memory and/or using a logic circuit, the communication apparatus to perform the method according to any one of the first aspect and the possible implementations of the first aspect or perform the method according to any one of the second aspect and the possible implementations of the second aspect.

In a possible implementation, the communication apparatus includes the memory, configured to store the foregoing computer program or instructions or configured to store a configuration file of the foregoing logic circuit.

Optionally, the memory and the processor are integrated together; or the memory and the processor are disposed separately. In another possible implementation, the memory is located outside the communication apparatus.

In a possible implementation, the communication apparatus further includes a transceiver. The transceiver is configured to receive a signal and/or send a signal.

According to an eighth aspect, this application provides a communication apparatus. The communication apparatus includes a processor and an interface circuit. The interface circuit is configured to receive computer-executable instructions and transmit the computer-executable instructions to the processor. The processor runs the computer-executable instructions to perform the method performed by the second apparatus or the first apparatus in the methods according to the first aspect and the second aspect.

According to a ninth aspect, this application provides a computer-readable storage medium. The computer-readable storage medium is configured to store computer-executable instructions. When the computer-executable instructions are executed, the method performed by the second apparatus or the first apparatus in the methods according to the first aspect and the second aspect is implemented.

According to a tenth aspect, this application provides a computer program product including a computer program. When the computer program is executed, the method performed by the second apparatus or the first apparatus in the methods according to the first aspect and the second aspect is implemented.

According to an eleventh aspect, this application provides a communication system. The communication system includes a second apparatus and a first apparatus. The second apparatus is configured to perform the method according to the first aspect, and the first apparatus is configured to perform the method according to the second aspect.

### BRIEF DESCRIPTION OF DRAWINGS

FIG. 1 is a diagram of a system architecture according to an embodiment of this application;
FIG. 2 is a diagram of a sensing system according to an embodiment of this application;
FIG. 3 is a diagram of a sensing-assisted communication system according to an embodiment of this application;
FIG. 4 is a schematic flowchart of a channel information transmission method according to an embodiment of this application;
FIG. 5 is a schematic flowchart of another channel information transmission method according to an embodiment of this application;
FIG. 6 is a diagram of a structure of a communication apparatus according to an embodiment of this application; and
FIG. 7 is a diagram of a structure of another communication apparatus according to an embodiment of this application.

### DESCRIPTION OF EMBODIMENTS

To make the objectives, technical solutions, and advantages of this application clearer, the following further describes this application in detail with reference to the accompanying drawings.

In this specification, claims, and accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of operations or units is not limited to the listed operations or units, but optionally further includes an unlisted operation or unit, or optionally further includes another inherent operation or unit of the process, the method, the product, or the device.

An "embodiment" mentioned in this specification means that a particular feature, structure, or characteristic described with reference to this embodiment may be included in at least one embodiment of this application. The phrase shown in various locations in this specification may not necessarily mean a same embodiment, and is not an independent or optional embodiment exclusive from another embodiment. It is explicitly and implicitly understood by a person skilled in the art that an embodiment described in this specification may be combined with another embodiment.

In this application, "at least one (item)" means one or more, "a plurality of" means two or more, "at least two (item)" means two, three, or more, and "and/or" is used to describe a correspondence between corresponding objects and indicates that three relationships may exist. For example, "A and/or B" may indicate three cases: Only A exists, only B exists, and both A and B exist, where A and B may be singular or plural. The character "/" generally indicates an "or" relationship between corresponding objects. "At least one of the following items (pieces)" or a similar expression thereof indicates any combination of these items, including any combination of a singular item (piece) or plural items (pieces). For example, at least one item (piece) of a, b, or c may indicate: a, b, c, "a and b", "a and c", "b and c", or "a, b, and c", where a, b, and c may be singular or plural.

To better understand embodiments of this application, the following first describes a system architecture in embodiments of this application.

Embodiments of this application may be applied to a wireless communication system such as a communication system that is evolved after 5G, for example, a long term evolution (long term evolution, LTE) system, a fifth generation mobile communication (5th generation mobile communication, 5G) system, or a sixth generation mobile communication (6th generation mobile communication, 6G) system, a satellite communication system, or a short-range communication system. The wireless communication system mentioned in embodiments of this application includes but is not limited to three application scenarios of a 5G/6G mobile communication system: enhanced mobile broadband (enhanced mobile broadband, eMBB), ultra-reliable and low-latency communication (ultra-reliable low-latency communication, URLLC), massive machine type communication (massive machine type of communication, mMTC), a long-range internet of things (long range, LoRa) system, or an internet of vehicles system. The wireless communication system may include one or more access network devices and one or more terminal devices.

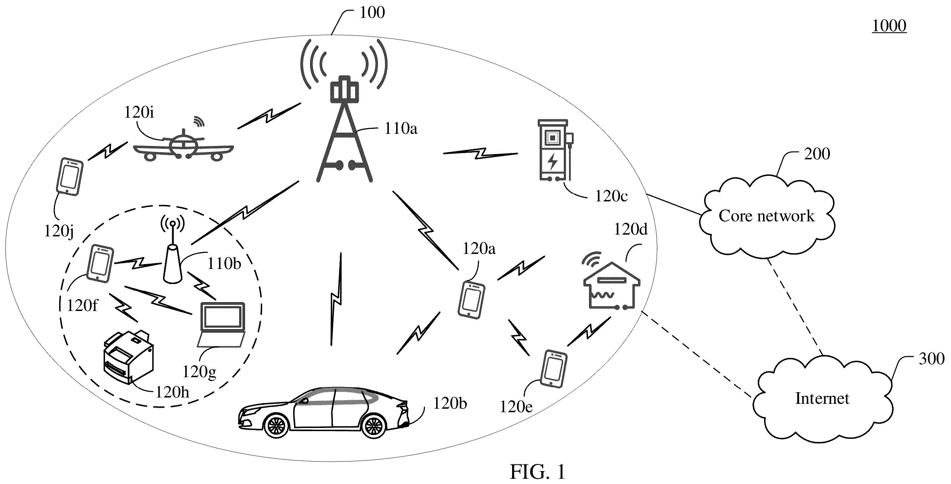

The following uses a system architecture shown in FIG. 1 as an example for description. As shown in FIG. 1, a communication system 1000 includes a radio access network (radio access network, RAN) 100 and a core network (core network, CN) 200. The RAN 100 includes at least one network device (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the network device 110 in a wireless manner. The network device 110 may be connected to the core network 200 in a wireless or wired manner. A core network device in the core network 200 and the network device 110 in the RAN 100 may be different physical devices, or may be a same physical device that integrates a logical function of the core network and a logical function of the radio access network.

It should be noted that the RAN 100 may be a cellular system related to the third generation partnership project (3rd generation partnership project, 3GPP), for example, a 4G mobile communication system, a 5G mobile communication system, or an evolved system after 5G (for example, a 6G mobile communication system). The RAN 100 may alternatively be an open access network (open RAN, O-RAN, or ORAN), a cloud radio access network (cloud radio access network, CRAN), or the like. The RAN 100 may alternatively be a communication system that integrates the foregoing two or more systems. It should be noted that quantities of network devices and terminal devices in FIG. 1 are merely examples, and should not be considered as a specific limitation on this application. When a method provided in this application is applied to the foregoing communication system, a first apparatus mentioned in this application may be a network device or a terminal device, and a second apparatus may be a network device or a terminal device. This is not specifically limited in this application. In a possible implementation, when the first apparatus is a network device, the second apparatus is a terminal device; or when the first apparatus is a terminal device, the second apparatus is a network device. The following describes in detail a terminal device and a network device that are related to the system architecture.

### 1. Terminal device

A terminal device may also be referred to as user equipment (user equipment, UE), a mobile station (mobile station, MS), a mobile terminal (mobile terminal, MT), or the like, or is a device that is configured to provide voice or data connectivity for a user, or may be an internet of things device. For example, the terminal device includes a handheld device, a vehicle-mounted device, or the like that has a wireless connection function. Currently, the terminal device may be: a mobile phone, a tablet computer, a notebook computer, a palmtop computer, a mobile internet device (mobile internet device, MID), a wearable device (for example, a smartwatch, a smart band, or a pedometer), a vehicle-mounted device (for example, a vehicle, a bicycle, an electric vehicle, an airplane, a ship, a train, or a high-speed railway), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an unmanned aerial vehicle, or an airplane), or the like. The terminal device may alternatively be another device having a terminal function. For example, the terminal device may alternatively be a device that functions as a terminal in D2D communication.

A device form of the terminal is not limited in this embodiment of this application. An apparatus configured to implement a function of the terminal device may be a terminal device, or may be an apparatus that can support the terminal device in implementing the function, for example, a chip system. The apparatus may be mounted in a terminal device or used in combination with a terminal device. In this embodiment of this application, the chip system may include a chip, or may include a chip and another discrete device.

### 2. Network device

A network device is a node in a radio access network (radio access network, RAN), and may also be referred to as an access network device, or may also be referred to as a RAN node (or device). The network device is configured to help the terminal implement radio access. A plurality of network devices 110 in the communication system 1000 may be nodes of a same type, or may be nodes of different types. In some scenarios, roles of the network device 110 and the terminal 120 are relative. For example, a network element 120i in FIG. 1 may be a helicopter or an unmanned aerial vehicle, and may be configured as a mobile base station. For a terminal 120j that accesses the RAN 100 through the network element 120i, the network element 120i is a base station. However, for the base station 110a, the network element 120i is a terminal. The network device 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the network device may be a base station (base station), an evolved NodeB (evolved NodeB, eNodeB), a transmission and reception point (transmission and reception point, TRP), a transmission point (transmission point, TP), a next generation NodeB (next generation NodeB, gNB), a next generation base station in a sixth generation (6th generation, 6G) mobile communication system, a base station in a future mobile communication system, a satellite, an integrated access and backhaul (integrated access and backhaul, IAB) node, or a network device in a mobile switching center-based non-terrestrial communication network (non-terrestrial network, NTN) communication system, that is, the network device may be deployed on a high-altitude platform, a satellite, or the like. The network device may be a macro base station (for example, 110a in FIG. 1), a micro base station or an indoor base station (for example, 110b in FIG. 1), a relay node or a donor node, or a radio controller in a CRAN scenario. The network device may alternatively be a device that functions as a base station in device to device (device to device, D2D) communication, internet of vehicles communication, unmanned aerial vehicle communication, or machine communication. Optionally, the network device may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of network devices collaborate to assist the terminal in implementing radio access, and different network devices respectively implement some functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including the CU node and the DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP or the CU-UP), the DU, and the RU in this application may be implemented by using a software module, a hardware module, or a combination of the software module and the hardware module.

In this embodiment of this application, a form of the network device is not limited. An apparatus configured to implement a function of the network device may be a network device, or may be an apparatus that can support the network device in implementing the function, for example, a chip system. The apparatus may be mounted in the network device or used in combination with the network device.

To facilitate understanding of content of this solution, the following further explains and describes some terms in embodiments of this application, so as to facilitate understanding by a person skilled in the art. This part is merely for ease of understanding, and cannot be considered as a specific limitation on this application.

### 1. Sensing technology

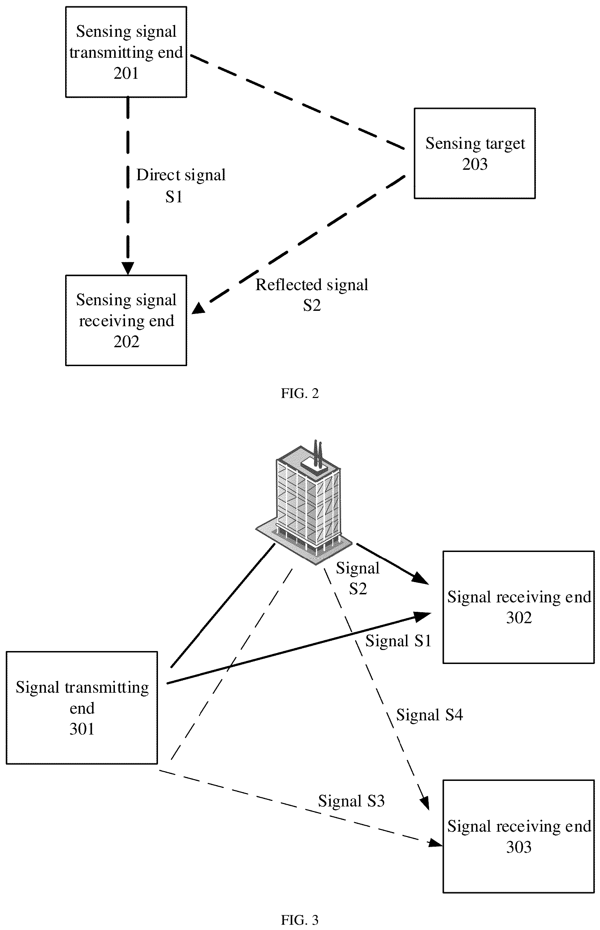

In an application of a sensing technology (also referred to as a radio sensing technology), a sensing device includes: an apparatus configured to transmit a sensing signal, which is referred to as a sensing signal transmitting end; and an apparatus configured to receive a sensing signal, which is referred to as a sensing signal receiving end. For example, when the sensing technology is used to sense a target object, a sensing system shown in FIG. 2 includes a sensing signal transmitting end 201, a sensing signal receiving end 202, and a sensing target 203. After the sensing signal transmitting end 201 transmits a sensing signal to the sensing signal receiving end 202, the sensing signal received by the sensing signal receiving end 202 includes a direct signal S1 and a reflected or scattered signal S2 that is reflected or scattered by the sensing target 203. When the sensing target 203 changes (for example, a form or a location changes), the reflected signal S2 also changes, so that a superimposed sensing signal received by the sensing signal receiving end 202 also changes accordingly. In addition, the sensing signal receiving end 202 detects that a channel of a radio link changes (which is represented as a change of a magnitude and a phase of channel information, and the like). Generally, the channel of the radio link is quantized and represented as channel information in a communication protocol, for example, channel state information (channel state information, CSI). Further, the sensing signal transmitting end 201 may initiate channel sounding to the sensing signal receiving end 202 at a specific time interval, to learn, based on a change of channel information transmitted by the sensing signal receiving end 202, whether the sensing target 203 changes.

### 2. Sensing-assisted communication

In an application process of a sensing technology, a sensing device may sense or understand a physical world by transmitting, reflecting, and scattering a radio signal (that is, a sensing signal) in a communication network. In addition, the communication network may obtain high-precision positioning, imaging, and environment reconstruction capabilities, to improve communication performance (including but not limited to: more accurate beamforming, faster beam failure recovery, reduced overheads during CSI tracking, and the like). Such a technology of combining the sensing technology with the communication network is referred to as sensing-assisted communication in this application.

For example, refer to a diagram of a sensing-assisted communication system shown in FIG. 3. The sensing-assisted communication system includes a signal transmitting end 301, a signal receiving end 302, and a signal receiving end 303. In an implementation of predicting channel information in combination with the sensing-assisted communication system (referred to as a sensing-assisted prediction function in the following), the signal transmitting end 301 and the signal receiving end 302 are performing (or have performed) a sensing service shown in FIG. 2. Further, the signal receiving end 302 obtains, through measurement, channel information of a sensing channel (that is, a channel used to transmit a sensing signal) based on the direct signal S1 and at least one signal S2 reflected or scattered back from a surrounding environment (for example, an environment building around the signal receiving end 302). In this case, if the signal transmitting end 301 and the signal receiving end 302 need to perform another communication service (a service other than the foregoing sensing service), channel information of a communication channel (that is, used to transmit the communication signal) corresponding to the communication service may be understood as being similar to the channel information of the sensing channel.

In an implementation of predicting channel information in combination with the sensing-assisted communication system (referred to as a sensing-assisted prediction function in the following), the signal transmitting end 301 and the signal receiving end 302 are performing (or have performed) the sensing service shown in FIG. 2. Further, the signal receiving end 302 performs environment reconstruction (that is, obtains, through sensing, a communication environment in which the signal receiving end 302 is located) based on the direct signal S1 and at least one signal S2 reflected or scattered from a surrounding environment. The signal transmitting end 301 obtains a location of the signal receiving end 303 in the communication environment, and obtains, based on the location of the signal receiving end 303 by using a channel information prediction model (a model obtained by using a channel modeling method), channel information of a corresponding communication channel used by the signal receiving end 303 to receive a direct signal S3 and at least one signal S4 that is reflected or scattered from a surrounding environment.

An execution device for obtaining the channel information based on the location of the signal receiving end 303 and the channel information prediction model is a device that is in communication connection to the signal transmitting end 301, or the signal transmitting end 301. The channel modeling method includes but is not limited to: a ray tracing method, a statistical method, and the like.

In an implementation, the terminal device may report the channel information through differential reporting between ports/subbands, through orthogonal basis sparse representation between ports/subband, or the like, to reduce overheads of reporting the channel information by the terminal device. For example, channel information of a port 0 is a₀, and channel information of a port 1 is a₁. When the terminal device reports channel information through differential reporting between ports, the terminal device may use the channel information of the port 0 as a reference, and calculate a difference (that is, a₁-a₀) between the channel information of the port 1 and the channel information of the port 0. Further, the channel information reported by the terminal device to the access network device is (a₀, a₁-a₀). Because a₁-a₀ is generally less than a₁, overheads for reporting (a₀, a₁-a₀) by the terminal device are less than overheads for reporting (a₀, a₁) by the terminal device. However, when channel information results between ports/subbands are greatly different, effect of reducing overheads achieved by reporting the channel information in the foregoing manner is poor. For example, in the foregoing example, when a₁-a₀ is close to a₁, overheads of feeding back the channel information cannot be reduced through differential reporting of channel information.

To reduce the overheads of feeding back the channel information by the apparatus, this application provides a channel information transmission method. The following further describes, with reference to the accompanying drawings, a channel information transmission method and a communication apparatus that are provided in this application.

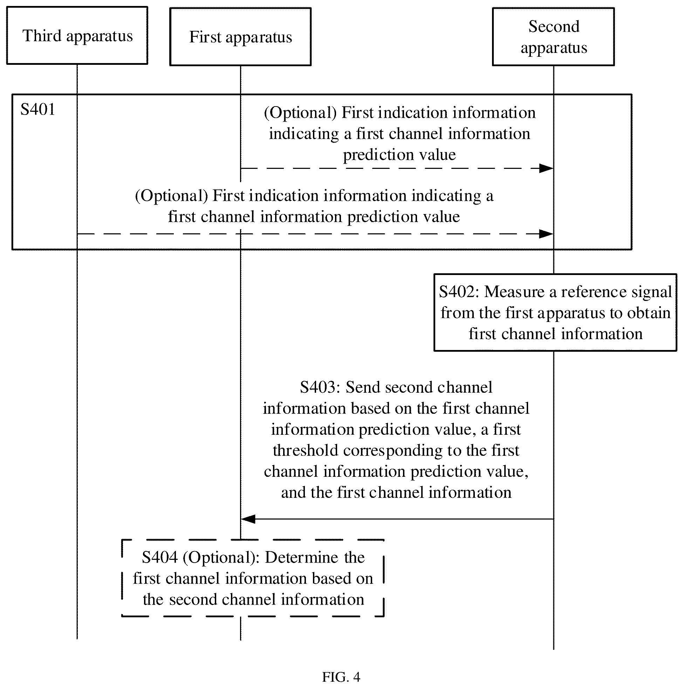

FIG. 4 is a schematic flowchart of a channel information transmission method according to an embodiment of this application. As shown in FIG. 4, the channel information transmission method includes the following steps S401 to S404. The method shown in FIG. 4 is described by using an example in which a second apparatus (that is, a channel information feedback party) and a first apparatus (that is, a channel information receiving party) are execution bodies. It may be understood that the first apparatus may be the foregoing terminal device, a chip in the terminal device, or an apparatus that is used in combination with the terminal device, or the first apparatus may be the foregoing network device, or a chip in the network device, or an apparatus that is used in combination with the network device. The second apparatus may be the foregoing terminal device, or a chip in the terminal device, or an apparatus that is used in combination with the terminal device, or the second apparatus may be the foregoing network device, a chip in the network device, or an apparatus that is used in combination with the network device.

S401: A second apparatus receives first indication information, where the first indication information indicates a first channel information prediction value.

Specifically, the second apparatus may receive the first indication information from the first apparatus or another apparatus (an apparatus other than the first apparatus, for example, a third apparatus). For ease of description, the following uses an example in which the first apparatus sends the first indication information to the second apparatus for description, and a specific procedure in which another apparatus sends the first indication information to the second apparatus may similarly refer to this procedure.

In a possible implementation, the first apparatus determines the first channel information prediction value, and sends the first indication information to the second apparatus.

A manner of determining the first channel information prediction value by the first apparatus includes but is not limited to the following: 1. The first apparatus determines the first channel information prediction value based on a sensing-assisted channel prediction function of the first apparatus (for details, refer to the implementation of predicting the channel information in combination the sensing-assisted communication system mentioned in FIG. 3). 2. The first apparatus determines the first channel information prediction value based on an average (or a median, a mode, or the like) determined by using historical channel information statistics in the communication network. 3. The first apparatus determines the first channel information prediction value based on reciprocity of uplink and downlink channels, that is, the first apparatus receives and measures a signal from the second apparatus to obtain channel information, and further determines the channel information as the first channel information prediction value. 4. The first apparatus determines the first channel information prediction value by using historical channel information and an artificial intelligence (artificial intelligence, AI) algorithm.

In another possible implementation, the first apparatus obtains the first channel information prediction value from a fourth apparatus (an apparatus that is in communication connection to the first apparatus), and sends the first indication information to the second apparatus.

A manner of determining the first channel information prediction value by the fourth apparatus includes but is not limited to the following: 1. The fourth apparatus determines the first channel information prediction value based on a sensing-assisted channel prediction function of the fourth apparatus (for details, refer to the implementation of predicting the channel information in combination with the sensing-assisted communication system mentioned in FIG. 3). 2. The fourth apparatus determines the first channel information prediction value based on an average (or a median, a mode, or the like) determined by using historical channel information statistics in the communication network. 3. The fourth apparatus determines the first channel information prediction value by using historical channel information and an AI algorithm. The fourth apparatus and the first apparatus may be located at a same physical location, or may be disposed separately. The fourth apparatus may implement a sensing processing function and/or a sensing management function. Optionally, the fourth apparatus may be a device such as a core network device or a server.

It should be noted that the first channel information prediction value is a prediction value corresponding to first channel information of a channel between the first apparatus and the second apparatus. The first channel information mentioned in this application includes but is not limited to one or more of the following information: a channel state information-reference signal resource indicator (channel state information-reference signal resource identifier, CRI), a rank indicator (rank indicator, RI), a channel quality indicator (channel quality indicator, CQI), a precoding matrix indicator (precoding matrix indicator, PMI), a layer indicator (layer indicator, LI), a transmission angle, a transmission delay, transmission power, a Doppler value, or the like. In a possible implementation, when the first channel information is one of the transmission angle, the transmission delay, the transmission power, or the Doppler value, the first channel information belongs to a channel parameter (channel parameter, CHP) related to multipath transmission; or when the first channel information is one of the CRI, the RI, the CQI, the PMI, or the LI, the first channel information belongs to CSI. In this application, the first indication information may be periodically sent to the second apparatus at a periodicity specified in a communication protocol (or negotiated by the first apparatus and the second apparatus), or the first indication information may be sent to the second apparatus based on a requirement of the first apparatus (that is, when the first apparatus needs the second apparatus to feed back the first channel information). This is not specifically limited in this application.

In a possible implementation, an indication manner in which the first indication information indicates the first channel information prediction value includes but is not limited to the following manners.

Indication manner 01: The first indication information directly indicates the first channel information prediction value.

In this manner, a value indicated by the first indication information is the first channel information prediction value.

Indication manner 02: The first indication information indirectly indicates the first channel information prediction value.

In this manner, the second apparatus may determine the first channel information prediction value based on a value indicated by the first indication information. In a possible implementation of the indication manner 02, the value indicated by the first indication information is a difference between the first channel information prediction value and a reference value. The reference value may be a value, of the first channel information, received by the second apparatus last time, may be a value, of the first channel information, received by the second apparatus for the first time, or may be a predefined value.

For example, an example in which the reference value may be the value, of the first channel information, received by the second apparatus last time is used for description. A value indicated by the first indication information for an N^{th} time is a difference between the first channel information prediction value and the prediction value that is of the first channel information and that is indicated by the first indication information for an (N-1)^{th} time, where N is an integer greater than 1. For example, the first channel information is a CQI. When the second apparatus receives the first indication information from the first apparatus for the first time, and a value indicated by the first indication information is 20, it indicates that a CQI prediction value indicated by the first indication information is 20. When the second apparatus receives the first indication information from the first apparatus for the second time, and a value indicated by the first indication information for the second time is +5 (that is, a difference between the value indicated this time and the value indicated last time is +5), in this case, the second apparatus determines, based on the value indicated by the first indication information (that is, +5) and the CQI prediction value indicated last time (that is, 20), that a CQI prediction value indicated by the first indication information is 25. When the second apparatus receives the first indication information from the access network device for the third time, and a value indicated by the first indication information for the third time is -10 (that is, a difference between the value indicated this time and the value indicated last time is -10), in this case, the second apparatus determines, based on the value indicated by the first indication information (that is, -10) and the CQI prediction value indicated last time (that is, 25), that a CQI prediction value indicated by the first indication information is 15.

S402: The second apparatus measures a reference signal from the first apparatus to obtain the first channel information.

That is, the first apparatus sends the reference signal to the second apparatus, and further, the second apparatus receives and measures the reference signal to obtain the first channel information. The first channel information is channel information corresponding to a channel for transmitting the reference signal.

For example, when the first apparatus is a terminal device, and the second apparatus is an access network device, the access network device sends a downlink reference signal to the terminal device, and the terminal device measures the downlink reference signal to obtain channel information of a downlink channel.

S403: The second apparatus sends second channel information to the first apparatus based on the first channel information prediction value, a first threshold corresponding to the first channel information prediction value, and the first channel information. Correspondingly, the first apparatus receives the second channel information from the second apparatus.

The first threshold is used to determine validity of the first channel information prediction value. It may be understood that when a difference between the first channel information and the first channel information prediction value is less than the first threshold, the difference between the first channel information prediction value and the first channel information is small, and the first channel information prediction value is valid; or when a difference between the first channel information and the first channel information prediction value is greater than the first threshold, the difference between the first channel information prediction value and the first channel information is large, and the first channel information prediction value is invalid. It should be noted that a case in which the difference between the first channel information and the first channel information prediction value is equal to the first threshold is not specifically limited in this application. In other words, in a possible implementation, when the difference between the first channel information and the first channel information prediction value is equal to the first threshold, the first channel information prediction value is valid. In another possible implementation, when the difference between the first channel information and the first channel information prediction value is equal to the first threshold, the first channel information prediction value is invalid.

To effectively reduce overheads of transmitting the channel information by the second apparatus, the second apparatus may send the difference between the first channel information and the first channel information prediction value to the first apparatus when the first channel information prediction value is valid; and the second apparatus may send the first channel information to the first apparatus when the first channel information prediction value is invalid. In other words, in a possible implementation, if the difference between the first channel information and the first channel information prediction value is less than or equal to the first threshold, the second channel information is the difference between the first channel information and the first channel information prediction value; or if the difference between the first channel information and the first channel information prediction value is greater than the first threshold, the second channel information is the first channel information.

For example, the first channel information, that is, a CQI value, is 25, and the first threshold corresponding to the first channel information prediction value is 8. In this case, if the first channel information prediction value, that is, the CQI prediction value, is 23 (a difference between the CQI prediction value and the first channel information is less than 8), the first channel information prediction value is valid, and the second apparatus sends the difference between the CQI value and the CQI prediction value to the first apparatus, that is, the second channel information is +2. If the first channel information prediction value, that is, the CQI prediction value, is 13 (a difference between the CQI prediction value and the first channel information is greater than 8), the first channel information prediction value is invalid, and the second apparatus sends the CQI value to the first apparatus, that is, the second channel information is 25 (that is, the first channel information).

With reference to this possible implementation, the second apparatus may further send type indication information to the first apparatus. The type indication information indicates a type of channel information (that is, the second channel information) transmitted by the second apparatus to the first apparatus. The type is a difference transmission type or a full-value transmission type. When the second channel information is the difference between the first channel information and the first channel information prediction value, the type indication information indicates that the type of the second channel information is the difference transmission type; or when the second channel information is the first channel information, the type indication information indicates that the type of the second channel information is the full-value transmission type. For example, the second apparatus indicates the type of the second channel information by using an indication character. For example, when a value of the indication character is 0, it indicates that the type of the second channel information is the difference transmission type; or when a value of the indication character is 1, it indicates that the type of the second channel information is the full-value transmission type.

The following again describes a case in which the second apparatus obtains the first threshold.

Case one: The second apparatus receives second indication information, where the second indication information indicates the first threshold. Specifically, refer to a manner of obtaining the first indication information, the second apparatus may receive a second indication information from the first apparatus or another apparatus (an apparatus other than the first apparatus, for example, a third apparatus). It should be noted that the first indication information and the second indication information may be sent at the same time (for example, included in a same message), or may be sent at different times (for example, included in different messages).

An indication manner in which the second indication information indicates the first threshold includes but is not limited to the following several types.

Indication manner 11: The second indication information directly indicates a specific value of the first threshold. In other words, the value included in the second indication information is the first threshold.

For example, the communication protocol specifies that a value of four bits is used to represent the second indication information. If a value of the second indication information is 0011, it may be understood that the value included in the second indication information is 3 (that is, the first threshold). If the value of the second indication information is 0111, it may be understood that the value included in the second indication information is 7 (that is, the first threshold). In this case, it may be understood that a scale factor corresponding to the first threshold is predefined in the communication system. A value of the scale factor predefined in the communication system is not specifically limited in this application. For example, in this example, the scale factor is predefined as 2.

In a possible implementation of the indication manner 11, the second indication information further indicates the scale factor corresponding to the first threshold, and the scale factor is associated with precision of the first threshold. It may be understood that the first threshold is a product of the scale factor and the value indicated by bits used for transmitting the second indication information. As the scale factor increases, precision of the first threshold decreases. In other words, a smaller scale factor indicates higher precision of the first threshold, and a larger scale factor indicates lower precision of the first threshold.

For example, when the value of the second indication information is 0111, it may be understood that the value included in the second indication information is 7. If the scale factor corresponding to the first threshold is 0.1, the first threshold indicated by the second indication information is 0.7 (that is, a product of 7 and 0.1). If the scale factor corresponding to the first threshold is 1, the first threshold indicated by the second indication information is 7 (that is, a product of 7 and 1).

Indication manner 12: The second indication information indirectly indicates a specific value of the first threshold. In other words, the second apparatus may determine the first threshold based on content indicated by the second indication information.

For example, a plurality of thresholds corresponding to the first channel information are predefined in the communication protocol, and each threshold corresponds to a number (which may be understood as identification information of the threshold). In this case, the second indication information includes a first number, and the second apparatus may determine the first threshold from the plurality of thresholds based on the first number (that is, the threshold corresponding to the first number).

In a possible implementation of the indication manner 12, the second indication information indicates a proportional relationship between the first threshold and the first channel prediction value. For example, the second apparatus receives the first indication information and the second indication information from the first apparatus. The first indication information indicates that the first channel prediction value, that is, the CQI prediction value, is 20. The second indication information indicates that the first threshold is 10% of the first channel prediction value. Further, the second apparatus determines, based on the second indication information, that the first threshold is 2.

Case two: The first threshold is pre-specified in a protocol (that is, the communication protocol).

In other words, the first threshold corresponding to the first channel information is pre-specified in the communication protocol. For example, when the first channel information is the CQI, the first threshold is Q1; and when the first channel information is the RI, the first threshold is Q2.

In a possible implementation in Case two, the first threshold is determined based on the first channel information and a first correspondence. The first correspondence indicates a correspondence between channel information and a threshold, and the first correspondence includes a correspondence between the first channel information and the first threshold. In this case, the second apparatus may determine the first threshold based on the first channel information and the correspondence between the first channel information and the first threshold in the first correspondence.

For example, as shown in Table 1, the first correspondence may be a threshold control word configuration table.

**Table 1**

| Numerical interval corresponding to a channel information prediction value | Threshold |
|---|---|
| [0, 10] | 1 |
| (10, 20] | 3 |
| (20, 30] | 5 |
| (30, 40] | 10 |

In this case, if the first channel information prediction value is 15, it may be determined, based on the threshold control word configuration table 1, that the first threshold corresponding to the first channel information is 3. It should be noted that Table 1 is merely an example of the threshold control word configuration table, and cannot be considered as a specific limitation on a value of a numerical interval, a location of a closed interval, and a correspondence between the numerical interval and a threshold. For example, a left-open and right-closed numerical interval (10, 20] in Table 1 may alternatively be replaced with a right-open and left-closed numerical interval [10, 20) in some cases.

S404 (Optional): The first apparatus determines the first channel information based on the second channel information.

That is, when the second channel information is the difference transmission type, the first apparatus determines the first channel information based on the second channel information and the first channel information prediction value; and when the second channel information is the full-value transmission type, the first apparatus determines the second channel information as the first channel information.

In conclusion, in a channel information transmission process described in FIG. 4, in a manner in which the second apparatus transmits measured channel information based on a prediction value (that is, the first channel information prediction value) that more closely matches the measured channel information (that is, the first channel information), a quantity of bits of transmitted channel information (that is, the second channel information) can be less than a quantity of bits of the measured channel information, and the first apparatus can still accurately determine the measured channel information based on the transmitted channel information. That is, in the manner described in the first aspect, overheads of transmitting channel information by the second apparatus can be reduced.

It should be noted that this application is described by using only an example in which the first channel information prediction value corresponds to one threshold (that is, the first threshold). This should not be considered as a specific limitation on this application. In a possible implementation, the first channel information prediction value may correspond to a plurality of thresholds (including the first threshold), and the thresholds are used to determine a degree of proximity between the first channel information prediction value and the first channel information. For example, the plurality of thresholds include the first threshold and a third threshold, where the third threshold is less than the first threshold, the first threshold is used to determine whether the first channel information prediction value is valid, and the third threshold is used to determine whether the first channel information prediction value is approximately equal to the first channel information. When the difference between the first channel information and the first channel information prediction value is less than or equal to the third threshold, the first channel information prediction value is approximately equal to the first channel information. In this case, the second channel information may be an indicator (that indicates the first apparatus to determine the first channel information prediction value as the first channel information). When the difference between the first channel information and the first channel information prediction value is greater than the third threshold and is less than or equal to the first threshold, the first channel information prediction value is valid, and the second channel information is the difference between the first channel information and the first channel information prediction value; or when the difference between the first channel information and the first channel information prediction value is greater than the first threshold, the first channel information prediction value is invalid, and the second channel information is the first channel information. According to this possible implementation, when the first channel information prediction value is approximate to the first channel information, transmission overheads can be further reduced.

It may be understood that, in a scenario in which a communication transmission resource of the second apparatus is limited, effect achieved by the method described in FIG. 4 is particularly prominent. For example, when the first apparatus is an access network device, and the second apparatus is a terminal device, in an uplink-limited scenario (for example, an internet of things (internet of things, IoT) application scenario), the method described in FIG. 4 can effectively reduce overheads of transmitting channel information by the terminal device. Alternatively, when the first apparatus is a terminal device and the second apparatus is an access network device, in a downlink-limited scenario (for example, a scenario in which the access network device is in a low-power consumption mode or an energy saving mode), the method described in FIG. 4 can effectively reduce overheads of feeding back channel information by the access network device.

In an application scenario, the second apparatus measures the reference signal from the first apparatus to obtain a plurality of pieces of channel information (including the first channel information). There is an association relationship between the plurality of pieces of channel information, and priorities of the pieces of channel information may be determined based on the association relationship between the plurality of pieces of channel information. For example, channel information 1 is determined based on channel information 2. In this case, it is determined that a priority of the channel information 2 is higher than a priority of the channel information 1. It may be understood that when a channel information prediction value corresponding to the channel information 2 (that is, channel information with a higher priority) is invalid, there is a high probability that a channel information prediction value corresponding to the channel information 1 (that is, channel information with a lower priority) is invalid.

With reference to this application scenario and the channel information transmission method described in FIG. 4, the following provides detailed description by using an example in which the first channel information belongs to CSI.

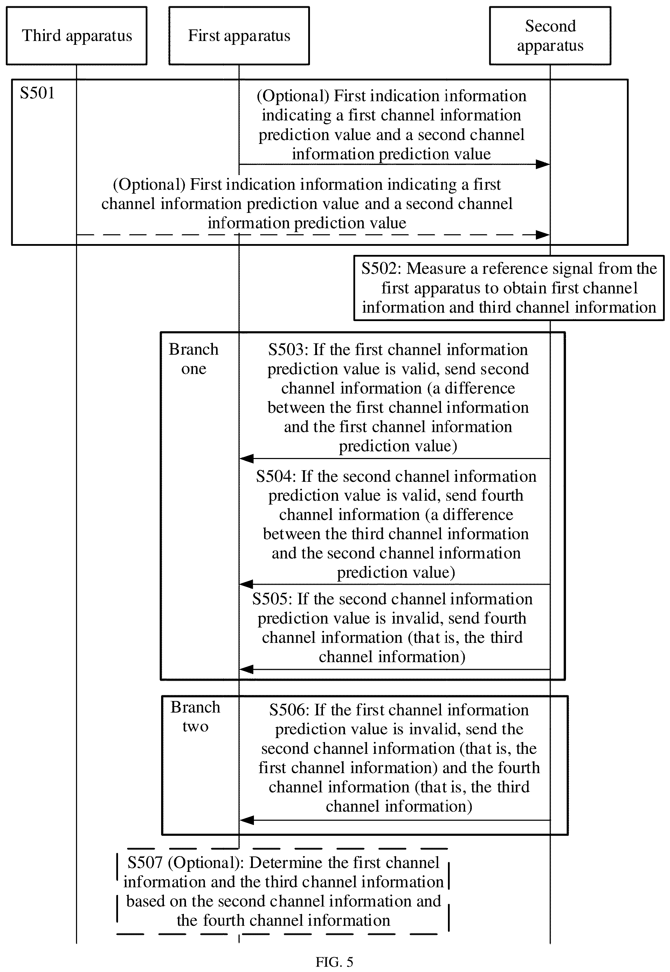

FIG. 5 is a schematic flowchart of a channel information transmission method according to an embodiment of this application. As shown in FIG. 5, the channel information transmission method includes the following steps S501 to S507. The method shown in FIG. 5 is described by using an example in which a second apparatus (that is, a channel information feedback party) and a first apparatus (that is, a channel information receiving party) are execution bodies. It may be understood that the first apparatus may be the foregoing terminal device, a chip in the terminal device, or an apparatus that is used in combination with the terminal device, or the first apparatus may be the foregoing network device, or a chip in the network device, or an apparatus that is used in combination with the network device. The second apparatus may be the foregoing terminal device, or a chip in the terminal device, or an apparatus that is used in combination with the terminal device, or the second apparatus may be the foregoing network device, a chip in the network device, or an apparatus that is used in combination with the network device.

S501: The second apparatus receives first indication information, where the first indication information indicates a first channel information prediction value and a second channel information prediction value.

The first channel information prediction value corresponds to the first channel information, and the second channel information prediction value corresponds to third channel information. Both the first channel information and the third channel information belong to CSI (that is, the CSI includes the first channel information and the third channel information), and a priority of the third channel information is lower than a priority of the first channel information. In a possible implementation, priorities of pieces of channel information included in the CSI are a CRI, an RI, a CQI, a PMI, and an LI in descending order. For example, the first channel information is the CRI, and the third channel information is the CQI.

In step S501, for a manner in which the first apparatus obtains the first channel information prediction value and the second channel information prediction value, refer to the description of obtaining the first channel information prediction value in step S401. For an indication manner in which the first indication information indicates the first channel information prediction value and the second channel information prediction value, refer to the indication manner 01 and the indication manner 02 in step S401. Details are not described herein again.

S502: The second apparatus measures a reference signal from the first apparatus to obtain the first channel information and the third channel information.

Correspondingly, the first apparatus sends the reference signal to the second apparatus, and further, the second apparatus receives and measures the reference signal to obtain the first channel information and the third channel information.

S503: If the first channel information prediction value is valid (that is, a difference between the first channel information and the first channel information prediction value is less than or equal to a first threshold), the second apparatus sends the second channel information to the first apparatus, where the second channel information is the difference between the first channel information and the first channel information prediction value.

For a specific implementation of S503, refer to the related implementation in which the second channel information is the difference between the first channel information and the first channel information prediction value in step S403. Details are not described herein again.

S504: If the second channel information prediction value is valid, the second apparatus sends fourth channel information to the first apparatus, where the fourth channel information is a difference between the third channel information and the second channel information prediction value.

That is, when the first channel information prediction value is valid, if the difference between the third channel information and the second channel information prediction value is less than or equal to a second threshold (that is, the second channel information prediction value is valid), the second apparatus sends the difference between the third channel information and the second channel information prediction value to the first apparatus.

For a manner in which the second apparatus obtains the second threshold, refer to descriptions of Case one and Case two in which the first threshold is obtained in step S403. Details are not described herein again.

S505: If the second channel information is invalid (that is, the difference between the third channel information and the second channel information prediction value is greater than the second threshold), the second apparatus sends the fourth channel information to the first apparatus, where the fourth channel information is the third channel information.

That is, when the first channel information prediction value is valid, if the difference between the third channel information and the second channel information prediction value is greater than the second threshold (that is, the second channel information prediction value is invalid), the second apparatus sends the third channel information to the first apparatus.

It should be noted that the second channel information and the fourth channel information in steps S503 to S505 may be sent at the same time, or may be sent at different times.

S506: If the first channel information is invalid (that is, the difference between the first channel information and the first channel information prediction value is greater than the first threshold), the second apparatus sends the second channel information and the fourth channel information to the first apparatus. The second channel information is the first channel information, and the fourth channel information is the third channel information.

That is, if the first channel information prediction value is invalid, the second apparatus determines that the second channel information prediction value is invalid, and the second apparatus sends the third channel information to the first apparatus.

S507 (Optional): The first apparatus determines the first channel information and the third channel information based on the second channel information and the fourth channel information.

For a specific implementation of S507, refer to the implementation in which the first apparatus determines the first channel information based on the second channel information in step S404. Details are not described herein again.

In conclusion, based on the channel information transmission method described in FIG. 5, the second apparatus determines, only when a channel information prediction value corresponding to channel information with a higher priority (that is, the first channel information) is valid, whether a channel information prediction value corresponding to channel information with a lower priority (that is, the third channel information) is valid. Further, the second apparatus sends the difference between the third channel information and the second channel information prediction value to the first apparatus based on a determining result, or sends the third channel information to the first apparatus based on a determining result. When the channel information prediction value corresponding to the channel information with a higher priority (that is, the first channel information) is invalid, the second apparatus directly determines that the channel information prediction value corresponding to the channel information with a lower priority (that is, the third channel information) is invalid, and sends the third channel information to the first apparatus, to save a computing resource of the second apparatus and reduce power consumption overheads of the second apparatus.

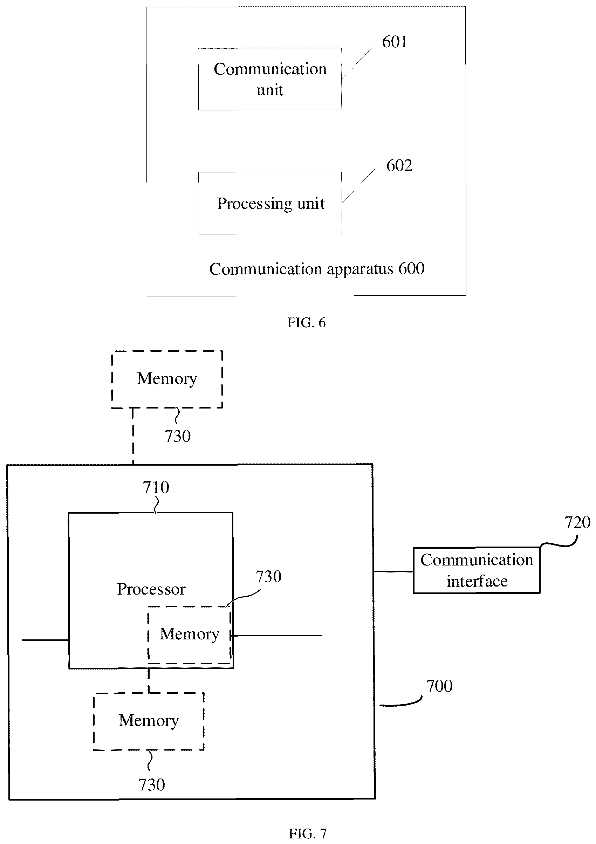

This application provides a communication apparatus that may be configured to implement functions of the first apparatus or the second apparatus. The communication apparatus may be the first apparatus or the second apparatus. The communication apparatus includes modules or units that are in one-to-one correspondence with the methods/operations/steps/actions performed by the first apparatus or the second apparatus in the foregoing method embodiments. The units may be implemented by a hardware circuit, software, or a combination of a hardware circuit and software. FIG. 6 is a diagram of a structure of a communication apparatus 600 according to an embodiment of this application. The communication apparatus 600 may include a communication unit 601 and a processing unit 602. Specifically, the processing unit 602 is configured to process signaling and/or data. The signaling and/or data may be data received by the communication unit 601, and processed signaling and/or data may also be sent by the communication unit 601.

In an implementation, when the communication apparatus 600 is the second apparatus, the communication apparatus 600 includes:
a communication unit 601, configured to receive first indication information, where the first indication information indicates a first channel information prediction value; and a processing unit 602, configured to measure a reference signal from the first apparatus to obtain the first channel information, where the processing unit 602 is further configured to send second channel information to the first apparatus based on the first channel information prediction value, a first threshold corresponding to the first channel information prediction value, and the first channel information.

In a possible implementation, if a difference between the first channel information and the first channel information prediction value is less than or equal to the first threshold, the second channel information is the difference between the first channel information and the first channel information prediction value; or if a difference between the first channel information and the first channel information prediction value is greater than the first threshold, the second channel information is the first channel information.

In a possible implementation, the communication unit 601 is further configured to receive second indication information, where the second indication information indicates the first threshold.

In a possible implementation, the second indication information further indicates a scale factor corresponding to the first threshold, and the scale factor is associated with precision of the first threshold.

In a possible implementation, the first threshold is pre-specified in a protocol.

In a possible implementation, the first threshold is determined based on the first channel information and a first correspondence, and the first correspondence includes a correspondence between the first channel information and the first threshold.

In a possible implementation, the communication unit 601 is further configured to send type indication information to the first apparatus, where the type indication information indicates a type of the second channel information, and the type is a difference transmission type or a full-value transmission type. When the second channel information is the difference between the first channel information and the first channel information prediction value, the type of the second channel information is the difference transmission type; or when the second channel information is the first channel information, the type of the second channel information is the full-value transmission type.

In a possible implementation, the first channel information belongs to a channel parameter CHP related to multipath transmission or channel state information CSI. The CHP includes one or more of the following information: a transmission angle, a transmission delay, transmission power, or a Doppler value. The CSI includes one or more of the following information: a channel state information-reference signal resource indicator CRI, a rank indicator RI, a channel quality indicator CQI, a precoding matrix indicator PMI, or a layer indicator LI.

In a possible implementation, the first channel information belongs to the channel state information CSI. The CSI further includes third channel information. A priority of the third channel information is lower than a priority of the first channel information. The first indication information further indicates a second channel information prediction value corresponding to the third channel information.

If the difference between the first channel information and the first channel information prediction value is less than or equal to the first threshold, and a difference between the third channel information and the second channel information prediction value is less than or equal to a second threshold, the communication unit 601 is further configured to send a difference between the third channel information and a third channel information prediction value to the first apparatus.

Alternatively, if the difference between the first channel information and the first channel information prediction value is greater than the first threshold, the communication unit 601 is further configured to send the third channel information to the first apparatus.

In a possible implementation, the first channel information prediction value is obtained based on a sensing-assisted channel prediction function of the first apparatus.

For specific implementations of the communication unit 601 and the processing unit 602, refer to specific implementation steps of the second apparatus in FIG. 4 or FIG. 5. Details are not described herein again.

In an implementation, when the communication apparatus shown in FIG. 6 is the first apparatus, the communication apparatus includes:
a communication unit 601, configured to send a reference signal to the second apparatus, where the reference signal is used to obtain first channel information, the communication unit 601 is further configured to receive second channel information from the second apparatus, and the second channel information is determined based on a first channel information prediction value, a first threshold corresponding to the first channel information prediction value, and the first channel information; and a processing unit 602, configured to determine the first channel information based on the second channel information and the first channel information prediction value.

In a possible implementation, if a difference between the first channel information and the first channel information prediction value is less than or equal to the first threshold corresponding to the first channel information prediction value, the second channel information is the difference between the first channel information and the first channel information prediction value; or if a difference between the first channel information and the first channel information prediction value is greater than the first threshold, the second channel information is the first channel information.

In a possible implementation, the communication unit 601 is further configured to send second indication information to the second apparatus, where the second indication information indicates the first threshold.

In a possible implementation, the second indication information further indicates a scale factor corresponding to the first threshold, and the scale factor is associated with precision of the first threshold.

In a possible implementation, the first threshold is pre-specified in a protocol.

In a possible implementation, the first threshold is determined based on the first channel information and a first correspondence, and the first correspondence includes a correspondence between the first channel information and the first threshold.

In a possible implementation, the communication unit 601 is further configured to receive type indication information from the second apparatus, where the type indication information indicates a type of the second channel information, and the type is a difference transmission type or a full-value transmission type. When the second channel information is the difference between the first channel information and the first channel information prediction value, the type of the second channel information is the difference transmission type; or when the second channel information is the first channel information, the type of the second channel information is the full-value transmission type.

In a possible implementation, the first channel information belongs to a channel parameter CHP related to multipath transmission or channel state information CSI. The CHP includes one or more of the following information: a transmission angle, a transmission delay, transmission power, or a Doppler value. The CSI includes one or more of the following information: a channel state information-reference signal resource indicator CRI, a rank indicator RI, a channel quality indicator CQI, a precoding matrix indicator PMI, or a layer indicator LI.

In a possible implementation, the first channel information belongs to the channel state information CSI. The CSI further includes third channel information. A priority of the third channel information is lower than a priority of the first channel information. The first indication information further indicates a second channel information prediction value corresponding to the third channel information. If the difference between the first channel information and the first channel information prediction value is greater than the first threshold, and a difference between the third channel information and the second channel information prediction value is less than or equal to a second threshold, the communication unit 601 is further configured to receive a difference between the third channel information and a third channel information prediction value from the second apparatus; or if the difference between the first channel information and the first channel information prediction value is greater than the first threshold, the communication unit 601 is further configured to receive the third channel information from the second apparatus.

In a possible implementation, the processing unit 602 is further configured to obtain the first channel information prediction value by using a sensing-assisted channel prediction function.

For specific implementations of the communication unit 601 and the processing unit 602, refer to specific implementation steps of the first apparatus in FIG. 4 or FIG. 5. Details are not described herein again.

FIG. 7 shows a communication apparatus 700 according to an embodiment of this application. The communication apparatus 700 is configured to implement functions of the second apparatus or the first apparatus. The apparatus may be a communication device or an apparatus used in a communication device, and the communication device may be a terminal or a network device. The apparatus used in the communication device may be a chip system or a chip in the communication device. The chip system may include a chip, or may include a chip and another discrete device.

The communication apparatus 700 includes at least one processor 710, configured to implement a processing function of a device (for example, the second apparatus or the first apparatus) in the methods provided in embodiments of this application. The communication apparatus 700 may further include a communication interface 720, configured to implement receiving and sending operations of a device (for example, the second apparatus or the first apparatus) in the methods provided in embodiments of this application. In this embodiment of this application, the communication interface may be a transceiver, a circuit, a bus, a module, or another type of communication interface, and is configured to communicate with another device through a transmission medium. For example, the communication interface 720 is used by an apparatus in the communication apparatus 700 to communicate with another device. The processor 710 receives and sends data through the communication interface 720, and is configured to implement the methods in the foregoing method embodiments.

The communication apparatus 700 may further include at least one memory 730, configured to store program instructions and/or data. The memory 730 is coupled to the processor 710. The coupling in this embodiment of this application may be an indirect coupling or a communication connection between apparatuses, units, or modules in an electrical form, a mechanical form, or another form, and is used for information exchange between the apparatuses, the units, or the modules. The processor 710 may operate in collaboration with the memory 730. The processor 710 may execute program instructions stored in the memory 730. At least one of the at least one memory may be included in the processor.

In this embodiment of this application, a specific connection medium between the communication interface 720, the processor 710, and the memory 730 is not limited. In this embodiment of this application, in FIG. 7, the memory 730, the processor 710, and the communication interface 720 are connected through a bus. The bus is represented by using a bold line in FIG. 7. A connection manner between other components is merely an example for description and does not constitute a limitation. The bus may be classified into an address bus, a data bus, a control bus, and the like. For ease of representation, only one bold line is used for representation in FIG. 7, but this does not mean that there is only one bus or only one type of bus.

When the communication apparatus 700 is specifically an apparatus used for a device (for example, the second apparatus or the first apparatus), for example, when the communication apparatus 700 is specifically a chip or a chip system, the communication interface 720 may output or receive a baseband signal. When the communication apparatus 700 is specifically a device (for example, the second apparatus or the first apparatus), the communication interface 720 may output or receive a radio frequency signal. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the methods disclosed with reference to embodiments of this application may be directly performed by a hardware processor, or may be performed through a combination of hardware in the processor and a software module.

It should be noted that the communication interface 720 may be configured to perform a function of the communication unit 601, and the processor 710 may be configured to perform a function of the processing unit 602. Details are not described herein again.

An embodiment of this application further provides a computer-readable storage medium. The computer-readable storage medium stores computer-executable instructions. When the computer-executable instructions are executed, the method performed by the second apparatus or the first apparatus in the foregoing method embodiments is implemented.

An embodiment of this application further provides a computer program product. The computer program product includes a computer program. When the computer program is executed, the method performed by the second apparatus or the first apparatus in the foregoing method embodiments is implemented.

An embodiment of this application further provides a computer program. When the computer program is executed, the method performed by the second apparatus or the first apparatus in the foregoing method embodiments is implemented.

An embodiment of this application further provides a communication system. The communication system includes a second apparatus and a first apparatus. The second apparatus is configured to perform the method performed by the second apparatus in the foregoing method embodiments, and the first apparatus is configured to perform the method performed by the first apparatus in the foregoing method embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to embodiments, and the involved actions and modules are not necessarily required by this application.

The descriptions of embodiments provided in this application may refer to each other, and the descriptions of embodiments have different focuses. For a part not described in detail in an embodiment, refer to the related descriptions in another embodiment. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely intended to describe the technical solutions of this application, rather than limit this application. Although this application is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A channel information transmission method, wherein the method comprises:
receiving first indication information, wherein the first indication information indicates a first channel information prediction value;
measuring a reference signal from a first apparatus to obtain first channel information; and
sending second channel information to the first apparatus based on the first channel information prediction value, a first threshold corresponding to the first channel information prediction value, and the first channel information.

2. The method according to claim 1, wherein
if a difference between the first channel information and the first channel information prediction value is less than or equal to the first threshold, the second channel information is the difference between the first channel information and the first channel information prediction value; or
if a difference between the first channel information and the first channel information prediction value is greater than the first threshold, the second channel information is the first channel information.

3. The method according to claim 2, wherein the method further comprises:
sending type indication information to the first apparatus, wherein the type indication information indicates a type of the second channel information, and the type is a difference transmission type or a full-value transmission type, wherein
when the second channel information is the difference between the first channel information and the first channel information prediction value, the type of the second channel information is the difference transmission type; or when the second channel information is the first channel information, the type of the second channel information is the full-value transmission type.

4. The method according to any one of claims 1 to 3, wherein the method further comprises:
receiving second indication information, wherein the second indication information indicates the first threshold.

5. The method according to claim 4, wherein the second indication information further indicates a scale factor corresponding to the first threshold, and the scale factor is associated with precision of the first threshold.

6. The method according to any one of claims 1 to 3, wherein the first threshold is pre-specified in a protocol.

7. The method according to claim 6, wherein
the first threshold is determined based on the first channel information and a first correspondence, and the first correspondence comprises a correspondence between the first channel information and the first threshold.

8. The method according to any one of claims 1 to 7, wherein the first channel information belongs to a channel parameter CHP related to multipath transmission or channel state information CSI, wherein
the CHP comprises one or more of the following information: a transmission angle, a transmission delay, transmission power, or a Doppler value; and the CSI comprises one or more of the following information: a channel state information-reference signal resource indicator CRI, a rank indicator RI, a channel quality indicator CQI, a precoding matrix indicator PMI, or a layer indicator LI.

9. The method according to any one of claims 1 to 8, wherein the first channel information belongs to the channel state information CSI, the CSI further comprises third channel information, a priority of the third channel information is lower than a priority of the first channel information, and the first indication information further indicates a second channel information prediction value corresponding to the third channel information; and the method further comprises:
if the difference between the first channel information and the first channel information prediction value is less than or equal to the first threshold, and a difference between the third channel information and the second channel information prediction value is less than or equal to the second threshold, sending a difference between the third channel information and the third channel information prediction value to the first apparatus; or
if the difference between the first channel information and the first channel information prediction value is greater than the first threshold, sending the third channel information to the first apparatus.

10. The method according to any one of claims 1 to 9, wherein the first channel information prediction value is obtained based on a sensing-assisted channel prediction function of the first apparatus.

11. A channel information transmission method, wherein the method comprises:
sending a reference signal to a second apparatus, wherein the reference signal is used to obtain first channel information;
receiving second channel information from the second apparatus, wherein the second channel information is determined based on a first channel information prediction value, a first threshold corresponding to the first channel information prediction value, and the first channel information; and
determining the first channel information based on the second channel information.

12. The method according to claim 11, wherein
if a difference between the first channel information and the first channel information prediction value is less than or equal to the first threshold corresponding to the first channel information prediction value, the second channel information is the difference between the first channel information and the first channel information prediction value; or
if a difference between the first channel information and the first channel information prediction value is greater than the first threshold, the second channel information is the first channel information.

13. The method according to claim 12, wherein the method further comprises:
receiving type indication information from the second apparatus, wherein the type indication information indicates a type of the second channel information, and the type is a difference transmission type or a full-value transmission type, wherein
when the second channel information is the difference between the first channel information and the first channel information prediction value, the type of the second channel information is the difference transmission type; or when the second channel information is the first channel information, the type of the second channel information is the full-value transmission type.

14. The method according to any one of claims 11 to 13, wherein the method further comprises:
sending second indication information to the second apparatus, wherein the second indication information indicates the first threshold.

15. The method according to claim 14, wherein the second indication information further indicates a scale factor corresponding to the first threshold, and the scale factor is associated with precision of the first threshold.

16. The method according to any one of claims 11 to 13, wherein the first threshold is pre-specified in a protocol.

17. The method according to claim 16, wherein
the first threshold is determined based on the first channel information and a first correspondence, and the first correspondence comprises a correspondence between the first channel information and the first threshold.

18. The method according to any one of claims 11 to 17, wherein the first channel information belongs to a channel parameter CHP related to multipath transmission or channel state information CSI, wherein
the CHP comprises one or more of the following information: a transmission angle, a transmission delay, transmission power, or a Doppler value; and the CSI comprises one or more of the following information: a channel state information-reference signal resource indicator CRI, a rank indicator RI, a channel quality indicator CQI, a precoding matrix indicator PMI, or a layer indicator LI.

19. The method according to any one of claims 11 to 18, wherein the first channel information belongs to the channel state information CSI, the CSI further comprises third channel information, a priority of the third channel information is lower than a priority of the first channel information, and the first indication information further indicates a second channel information prediction value corresponding to the third channel information; and the method further comprises:
if the difference between the first channel information and the first channel information prediction value is greater than the first threshold, and a difference between the third channel information and the second channel information prediction value is less than or equal to the second threshold, receiving a difference between the third channel information and a third channel information prediction value from the second apparatus; or
if the difference between the first channel information and the first channel information prediction value is greater than the first threshold, receiving the third channel information from the second apparatus.

20. The method according to any one of claims 11 to 19, wherein the method further comprises:
obtaining the first channel information prediction value by using a sensing-assisted channel prediction function.

21. A communication apparatus, wherein the apparatus comprises:
a communication unit, configured to receive first indication information, wherein the first indication information indicates a first channel information prediction value; and
a processing unit, configured to measure a reference signal from a first apparatus to obtain first channel information, wherein
the processing unit is further configured to send second channel information to the first apparatus based on the first channel information prediction value, a first threshold corresponding to the first channel information prediction value, and the first channel information.

22. The apparatus according to claim 21, wherein
if a difference between the first channel information and the first channel information prediction value is less than or equal to the first threshold, the second channel information is the difference between the first channel information and the first channel information prediction value; or
if a difference between the first channel information and the first channel information prediction value is greater than the first threshold, the second channel information is the first channel information.

23. The apparatus according to claim 22, wherein
the communication unit is further configured to send type indication information to the first apparatus, wherein the type indication information indicates a type of the second channel information, and the type is a difference transmission type or a full-value transmission type; and
when the second channel information is the difference between the first channel information and the first channel information prediction value, the type of the second channel information is the difference transmission type; or when the second channel information is the first channel information, the type of the second channel information is the full-value transmission type.

24. The apparatus according to any one of claims 21 to 23, wherein
the communication unit is further configured to receive second indication information, wherein the second indication information indicates the first threshold.

25. The apparatus according to claim 24, wherein the second indication information further indicates a scale factor corresponding to the first threshold, and the scale factor is associated with precision of the first threshold.

26. The apparatus according to any one of claims 21 to 23, wherein the first threshold is pre-specified in a protocol.

27. The apparatus according to claim 26, wherein
the first threshold is determined based on the first channel information and a first correspondence, and the first correspondence comprises a correspondence between the first channel information and the first threshold.

28. The apparatus according to any one of claims 21 to 27, wherein the first channel information belongs to a channel parameter CHP related to multipath transmission or channel state information CSI, wherein
the CHP comprises one or more of the following information: a transmission angle, a transmission delay, transmission power, or a Doppler value; and the CSI comprises one or more of the following information: a channel state information-reference signal resource indicator CRI, a rank indicator RI, a channel quality indicator CQI, a precoding matrix indicator PMI, or a layer indicator LI.

29. The apparatus according to any one of claims 21 to 28, wherein the first channel information belongs to the channel state information CSI, the CSI further comprises third channel information, a priority of the third channel information is lower than a priority of the first channel information, and the first indication information further indicates a second channel information prediction value corresponding to the third channel information; and
if the difference between the first channel information and the first channel information prediction value is less than or equal to the first threshold, and a difference between the third channel information and the second channel information prediction value is less than or equal to the second threshold, the communication unit is further configured to send a difference between the third channel information and a third channel information prediction value to the first apparatus; or
if the difference between the first channel information and the first channel information prediction value is greater than the first threshold, the communication unit is further configured to send the third channel information to the first apparatus.

30. The apparatus according to any one of claims 21 to 29, wherein the first channel information prediction value is obtained based on a sensing-assisted channel prediction function of the first apparatus.

31. A communication apparatus, wherein the apparatus comprises:
a communication unit, configured to send a reference signal to a second apparatus, wherein the reference signal is used to obtain first channel information; and
the communication unit is further configured to receive second channel information from the second apparatus, wherein the second channel information is determined based on a first channel information prediction value, a first threshold corresponding to the first channel information prediction value, and the first channel information; and
a processing unit, configured to determine the first channel information.

32. The apparatus according to claim 31, wherein
if a difference between the first channel information and the first channel information prediction value is less than or equal to the first threshold corresponding to the first channel information prediction value, the second channel information is the difference between the first channel information and the first channel information prediction value; or
if a difference between the first channel information and the first channel information prediction value is greater than the first threshold, the second channel information is the first channel information.

33. The apparatus according to claim 32, wherein
the communication unit is further configured to receive type indication information from the second apparatus, wherein the type indication information indicates a type of the second channel information, and the type is a difference transmission type or a full-value transmission type; and
when the second channel information is the difference between the first channel information and the first channel information prediction value, the type of the second channel information is the difference transmission type; or when the second channel information is the first channel information, the type of the second channel information is the full-value transmission type.

34. The apparatus according to any one of claims 31 to 33, wherein
the communication unit is further configured to send second indication information to the second apparatus, wherein the second indication information indicates the first threshold.

35. The apparatus according to claim 34, wherein the second indication information further indicates a scale factor corresponding to the first threshold, and the scale factor is associated with precision of the first threshold.

36. The apparatus according to any one of claims 31 to 33, wherein the first threshold is pre-specified in a protocol.

37. The apparatus according to claim 36, wherein
the first threshold is determined based on the first channel information and a first correspondence, and the first correspondence comprises a correspondence between the first channel information and the first threshold.

38. The apparatus according to any one of claims 31 to 37, wherein the first channel information belongs to a channel parameter CHP related to multipath transmission or channel state information CSI;
the CHP comprises one or more of the following information: a transmission angle, a transmission delay, transmission power, or a Doppler value; and the CSI comprises one or more of the following information: a channel state information-reference signal resource indicator CRI, a rank indicator RI, a channel quality indicator CQI, a precoding matrix indicator PMI, or a layer indicator LI.

39. The apparatus according to any one of claims 31 to 38, wherein the first channel information belongs to the channel state information CSI, the CSI further comprises third channel information, a priority of the third channel information is lower than a priority of the first channel information, and the first indication information further indicates a second channel information prediction value corresponding to the third channel information; and
if the difference between the first channel information and the first channel information prediction value is greater than the first threshold, and a difference between the third channel information and the second channel information prediction value is less than or equal to the second threshold, the communication unit is further configured to receive a difference between the third channel information and a third channel information prediction value from the second apparatus; or
if the difference between the first channel information and the first channel information prediction value is greater than the first threshold, the communication unit is further configured to receive the third channel information from the second apparatus.

40. The apparatus according to any one of claims 31 to 39, wherein
the processing unit is further configured to obtain the first channel information prediction value by using a sensing-assisted channel prediction function.

41. A communication apparatus, comprising a processor and an interface circuit, wherein the interface circuit is configured to receive a signal from a device other than the communication apparatus and transmit the signal to the processor, and/or send a signal from the processor to a device other than the communication apparatus; and the processor is configured to implement the method according to any one of claims 1 to 10 or is configured to implement the method according to any one of claims 11 to 20 by using a logic circuit or executing a computer program or instructions.

42. The communication apparatus according to claim 41, wherein the communication apparatus further comprises a memory, and the memory stores the computer program or the instructions, or a configuration file of the logic circuit.

43. A communication system, wherein the communication system comprises a first communication apparatus and a second communication apparatus, the second apparatus is configured to implement the method according to any one of claims 1 to 10, and the first apparatus is configured to implement the method according to any one of claims 11 to 20.

44. A computer-readable storage medium, wherein the storage medium stores a computer program or instructions, and when the computer program or the instructions are executed by an apparatus, the method according to any one of claims 1 to 10 is implemented, or the computer program or the instructions are used to implement the method according to any one of claims 11 to 20.

45. A computer program product, wherein when the computer program product is read and executed, a communication apparatus is enabled to perform the method according to any one of claims 1 to 10, or perform the method according to any one of claims 11 to 20.
